# EUROPÄISCHE PATENTANMELDUNG

(11) **EP 1 217 063 A2**
(43) Veröffentlichungstag der Anmeldung: **26.06.2002**
(21) Anmeldenummer: 01103915.3
(22) Anmeldetag: 17.02.2001
(51) Int. Cl.: C10J 3/48, C10J 3/76, B09B 3/00

(54) **Verfahren und Vorrichtung zur Verwertung von Tiermehl**

(30) Priorität: 22.12.2000 DE 10064686
(71) Anmelder: NOELL TECHNOLOGIES GMBH, 04435 SCHKEUDITZ (DE)
(72) Erfinder: Görz, Jürgen, Dr. rer. nat., 09599 Freiberg (DE); Hoffmann, Lutz, Dipl.-Ing., 04687 Trebsen (DE); Müller, Ulrich, Dr. rer. nat., 09599 Freiberg (DE); Schingnitz, Manfred, Dr.-Ing., 09599 Freiberg (DE); Seidel, Wolfgang, Dipl.-Ing., 09627 Oberbobritzsch (DE)
(74) Vertreter: Lüdtke, Frank, Dipl.-Ing.

(57) **Zusammenfassung**

Die Erfindung betrifft ein Verfahren zur stofflichen oder energetischen Verwertung von Tiermehl durch
- Herstellung einer pumpbaren Maische aus Wasser und Tiermehl oder Ölen unterschiedlicher Konsistenz mit Tiermehl.
- Förderung der Maische unter Druck in einen als Flugstromreaktor ausgebildeten Vergasungsreaktor.
- Umsatz der Maische mit technischem Sauerstoff oder einem freien Sauerstoff enthaltenden Vergasungsmittel zu einem Rohsynthesegas.
- Einstellung einer Vergasungstemperatur, bei der die anorganischen Bestandteile des Tiermehls aufgeschmolzen und als schmelzflüssige Schlacke aus dem Vergasungsreaktor ausgetragen werden.
- Direkte oder indirekte Abkühlung des den Vergasungsraum verlassenden Rohgases.
- Abkühlung und Granulierung der schmelzflüssigen Schlacke durch Kontaktierung mit Wasser in einem der Vergasungskammer nachgeordneten Kühl- oder Quenchraum.
- Reinigung und Konditionierung des gekühlten Rohgases zur Erzeugung von Synthesegas oder energetischem Gas.
und eine Vorrichtung zur Durchführung des Verfahrens.

## Beschreibung

Die Erfindung betrifft ein Verfahren und Vorrichtungen zur energetischen und stofflichen Verwertung von Tiermehl.

Die energiewirtschaftliche Verwertung des Tiermehls in bestehenden Feuerungsanlagen ist durch den hohen Heizwert des Tiermehls sowie die chemische Zusammensetzung der Asche (hoher Alkaligehalt) erschwert, d. h., das Tiermehl kann nur in geringen Mengen zudosiert werden. Ein Einsatz in Zementöfen kommt in größeren Mengen gleichfalls wegen der Zusammensetzung der Tiermehlasche nicht in Frage.

In der Technik der Gaserzeugung ist die Vergasung von Brennstoffen, die sich in einem fließfähigen Zustand befinden oder in diesen überführt werden können, durch partielle Oxidation im Flugstrom bekannt.

Aus DE OS 28 31 208 sind ein Verfahren und eine Vorrichtung zur Druckvergasung staubförmiger Brennstoffe bekannt bei dem unter Druck durch Partialoxydation mit Sauerstoff ein Brenngas und eine Schlacke erzeugt werden. Dazu ist ein staubförmiges fluidisiertes Schüttgut erforderlich welches mittels einer Wirbelschicht in einem Dosierbehälter aufgelockert und in den Vergasungsreaktor gefördert wird. Tiermehl weist jedoch ein sehr ungünstiges Förderverhalten auf, so dass es nicht in dieser Form der Vergasung zugeführt werden kann.

Aus EP 0 545 241 B1 ist ein Verfahren zur thermischen Verwertung von Abfallstoffen bekannt bei dem Stoffe wie Hausmüll, Industrieabfälle, Farbrückstände, Shredder-Leichtgut oder ähnliche Stoffe zunächst einer Pyrolyse und anschließend einer Vergasung zugeführt werden, wodurch neben metallischen Bestandteilen eine Schlacke und ein Gas gewonnen werden.

Auch dieses Verfahren ist für Tiermehl auf Grund dessen Förderverhalten nicht geeignet.

Der Erfindung liegt daher die Aufgabe zugrunde, ein Verfahren und die dazu gehörenden Vorrichtungen zu entwickeln, die eine Verwertung von Tiermehl zu energetischen und stofflichen Zwecken in uneingeschränktem Umfang gestattet.

Diese Aufgabe wird durch ein Verfahren nach den Merkmalen des ersten Patentanspruches und eine Vorrichtung zur Durchführung des Verfahrens gelöst. Die weiteren Ansprüche geben die besondere Gestaltung des Verfahrens und der Vorrichtungen wieder.

Das erfindungsgemäße Verfahren zur stofflichen und/oder energetischen Verwertung von Tiermehl zeichnet sich aus durch folgende Verfahrensschritte aus:
- Herstellung einer pumpbaren Maische aus Wasser und Tiermehl oder Ölen unterschiedlicher Konsistenz mit Tiermehl.
- Förderung der Maische unter Druck in einen als Flugstromreaktor ausgebildeten Vergasungsreaktor.
- Umsatz der Maische mit technischem Sauerstoff oder einem freien Sauerstoff enthaltenden Vergasungsmittel zu einem Rohsynthesegas.
- Einstellung einer Vergasungstemperatur, bei der die anorganischen Bestandteile des Tiermehls aufgeschmolzen und als schmelzflüssige Schlacke aus dem Vergasungsreaktor ausgetragen werden.
- Direkte oder indirekte Abkühlung des den Vergasungsraum verlassenden Rohgases.
- Abkühlung und Granulierung der schmelzflüssigen Schlacke durch Kontaktierung mit Wasser in einem der Vergasungskammer nachgeordneten Kühl- oder Quenchraum.
- Reinigung und Konditionierung des gekühlten Rohgases zur Erzeugung von Synthesegas oder energetischem Gas.

Es ist vorteilhaft, wenn die zur Vergasung gelangende Maische bis zu 70 Masse-% Tiermehl und 30 Masse-% Wasser oder Öle enthält. Der Anteil an Wasser kann dabei bis auf 50% steigen, bei Öl sind keine Grenzen gesetzt.

Weiterhin ist es von Vorteil, wenn die Vergasung der Maische bei Drücken zwischen Umgebungsdruck und 70 bar, bevorzugt zwischen 10 und 30 bar sowie bei Temperaturen zwischen 1100 °C und 1700 °C, bevorzugt zwischen 1200 °C bis 1600 °C durchgeführt wird.

Weiterhin kann zur Erniedrigung des Schmelzpunktes der anorganischen Bestandteile des Tiermehls der Maische Flussmittel zugesetzt werden.

Es ist weiterhin von Vorteil, als Flussmittel SiO₂, CaO, Al₂O₃ und Fe₂O₃ allein oder in ihren Mischungen einzusetzen.

Von Vorteil ist es weiterhin die zur Vergasung gelangende Maische über ein Brennersystem der Vergasungskammer zuzuführen, bei der die Zerteilung der Maische durch eine Druckzerstäubung durchgeführt wird.

Weiterhin ist es vorteilhaft, wenn das Vergasungsrohgas und die flüssige Schlacke gemeinsam in einer der Vergasungskammer nachgeordneten Kühlkammer abgekühlt werden.

Von Vorteil ist es weiterhin, wenn die zur Vergasung gelangende Maische über ein Brennersystem der Vergasungskammer zugeführt wird, bei der die Zerteilung der Maische durch eine Injektionszerstäubung durchgeführt wird, wobei Wasserdampf, der der Vergasung dienende Sauerstoff oder ein anderes brennbares oder nicht brennbares Gas als Zerstäubungsmedium dienen.

Weiterhin ist es von Vorteil, wenn das Vergasungsrohgas und die flüssige Schlacke getrennt aus der Vergasungskammer abgeführt und Kühlvorrichtungen zugeführt werden.

Die Vorrichtung zur Durchführung eines Verfahrens weist erfindungsgemäß eine Vergasungskammer eines Flugstromreaktors auf, die durch eine gekühlte Kontur begrenzt wird.

Die gekühlte Kontur des Flugstromreaktors besteht aus einem geschlossenen System gasdicht verschweißter Rohre, die bestiftet und mit einer dünnen Schicht aus SiC belegt sind und zur Kühlung von Wasser durchströmt werden.

Die Kühlkammer ist mit einem System von Düsen ausgerüstet über die Kühlwasser im Überschuss eingespritzt wird.

Die Kühlvorrichtung kann als indirekter Wärmeübertrager ausgebildet sein, wobei gleichzeitig während des Kühlvorganges Dampf erzeugt wird.

Im folgenden soll das erfindungsgemäße Verfahren an einem Beispiel näher erläutert werden.

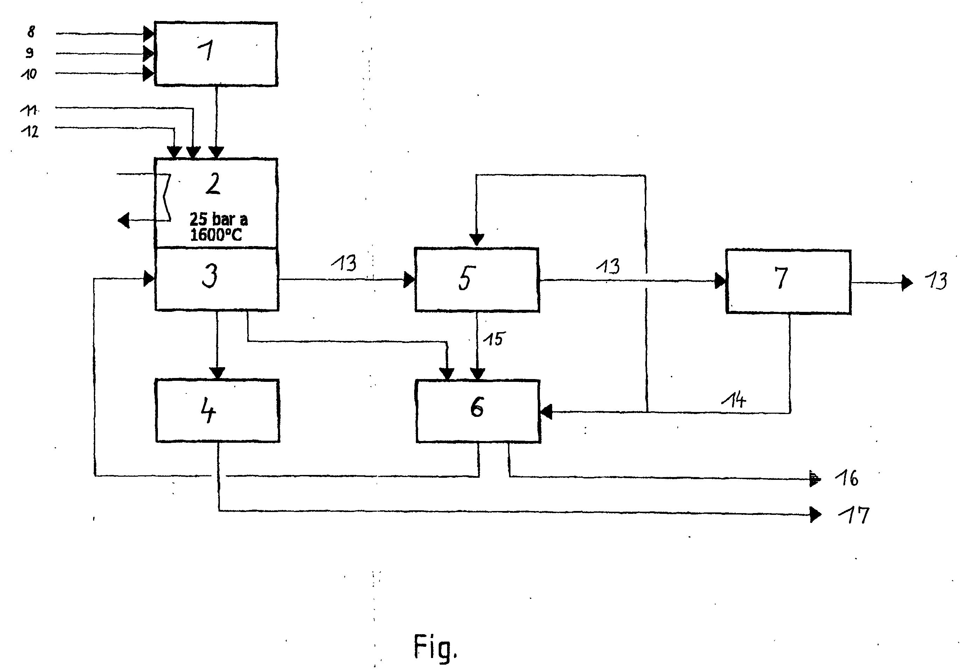

Die Figur zeigt das Blockschema eines entsprechenden Verfahrensbeispieles.

Das Tiermehl 8, Oel 9 und Flußmittel 10 werden in der Prozessstufe der Maischeherstellung 1 zunächst gemischt und dann gemeinsam mit Sauerstoff 11 und Dampf 12 dem Vergasungsreaktor 2 zugeführt.

Das Tiermehl 8 wird mit Öl 9 im Verhältnis von 50 Masse-% Tiermehl 8 und 50 % Öl 9 oder Flußmittel 10 gemischt. Die homogene Maische wird nach der Maischeherstellung 1 mittels Pumpen unter Druck dem als Flugstromreaktor ausgebildeten Vergasungsreaktor 2 zugeführt. Die Tiermehl/Öl-Maische wird mittels Dampf zerstäubt. Das mit dem Dampf 12 zugeführte Wasser unterdrückt die Rußbildung bei der Vergasung. Die Vergasung wird mit technischem Sauerstoff 11 oder anderen freien Sauerstoff enthaltenden Vergasungsmitteln vorgenommen. Der Vergasungsdruck liegt in Abhängigkeit vom Verwendungszweck des Vergasungsgases zwischen 10 - 30 bar. Die Vergasungstemperatur wird so gewählt, dass die anorganischen Bestandteile des Tiermehls 8 als schmelzflüssige Schlacke aus dem Vergasungsreaktor 2 austreten. Die Temperatur liegt zwischen 1200 - 1600 °C. Um den Schmelzpunkt der anorganischen Bestandteile zu senken, damit er diesen optimalen Bereich erreicht, ist der Maische Flussmittel 10 zugesetzt worden. In Abhängigkeit von der Zusammensetzung der anorganischen Tiermehlbestandteile kommen als Flussmittel CaO, AL₂O₃, Fe₂O₃ und SiO₂ in Mischung zum Einsatz. Tabelle 1 zeigt zwei Beispiele für die Zusammensetzung des Tiermehls 8 und dessen Asche in Masseprozent (Ma).

Der Vergasungsreaktor 2 ist ein Druckgefäß, dessen Reaktionsraum durch eine gekühlte Kontur begrenzt wird. Diese gekühlte Kontur besteht aus einem geschlossenen System gasdicht verschweißter Rohre, die bestiftet und mit einer dünnen Schicht SiC belegt sind. (NOELL-Konversionsverfahren zur Verwertung und Entsorgung von Abfällen; J. Carl, P. Fritz, EF-Verlag). Die Rohre werden zur Kühlung von Wasser durchströmt.

Im Ausführungsbeispiel ist der Vergasungsreaktor 2 direkt mit der Quenchkammer 3 verbunden. Während der Umsetzung mit Sauerstoff werden die organischen Verbindungen primär in H₂ und CO umgewandelt. Die nichtflüchtigen anorganischen Bestandteile und das zugesetzte Flussmittel 10 liegen als homogene flüssige Schlacke vor.

Gas und flüssige Schlacke verlassen gemeinsam die Reaktionskammer 2 und werden in der sich anschließenden Quenchkammer 3 gekühlt. Die Schlacke erstarrt und sammelt sich am Boden der Quenchkammer 3. Das Rohgas 13 wird anschließend weiter gereinigt und gekühlt. Die granulierte Schlacke 17 wird über ein Schleusensystem 4 aus der Quenchkammer 3 ausgetragen und der stofflichen Verwertung zugeführt.

Quenchtemperatur und weitere Gasreinigung und -kühlung richten sich nach dem Verwendungszweck des Gases und der Nutzung des erzeugbaren Dampfes. Im Ausführungsbeispiel wird das Rohgas 13 aus dem Quencher 3 einem Venturiwäscher 5 zugeführt wonach eine Rohgaskühlung 7 erfolgt. Das Waschwasser 15 aus dem Venturiwäscher 5 gelangt in einen Kondensatbehälter 6 und verlässt als Prozesswasser 16 das Verfahren oder wird dem Quencher 3 zugeführt.

In Tabelle 2 sind die entsprechenden Werte für Einsatzstoffe und Ausbeute des Verfahrensbeispiels zusammengestellt.

Die Abführung des Vergasungsgases 13 aus dem Reaktor 2 kann auch getrennt von der Schlacke erfolgen.

Die erfindungsgemäße Lösung hat den Vorteil, daß auf diese Weise Tiermehl 8 unter Gewinnung von Energie und Wertstoff entsorgt werden kann.

### Liste der verwendeten Bezugszeichen

- 1: Maischeherstellung
- 2: Vergasungsreaktor
- 3: Quencher
- 4: Schlackeschleuse
- **5**: Venturiwäscher
- **6**: Kondensatbehälter
- **7**: Rohgaskühlung
- **8**: Tiermehl
- **9**: Öl/ oder Wasser
- **10**: Flussmittel
- **11**: Sauerstoff
- **12**: Dampf
- **13**: Rohgas
- **14**: Kondensat
- **15**: Waschwasser
- **16**: Prozesswasser
- 17: granulierte Schlacke

**Tabelle 1**

| **Tiermehl-Analyse** | | | |
|---|---|---|---|
| | | **A** | **B** |
| C | Ma.-% | 44,05 | 43,5 |
| H | Ma.-% | 6.14 | 6,1 |
| O | Ma.-% | 18,47 | 20,8 |
| N | Ma.-% | 7,88 | 9,0 |
| S | Ma.-% | 0,58 | 0,48 |
| F | Ma. -% | 0,78 | |
| Cl | Ma. -% | | 0,8 |
| P | Ma.-% | | 1,82 |
| Asche | Ma.-% | 18,00 | 16,4 |
| H₂O | Ma.-% | 4,10 | 1,1 |
| Hu | MJ/kg | 19,023 | 18,960 |
| | | | |

| **Asche/Schlacke** | | | |
|---|---|---|---|
| SiO₂ | Ma.-% | 32,6 | 6,8 |
| Fe₂O₃ | Ma.-% | 3,3 | 1,1 |
| Al₂O₃ | Ma. -% | 12,1 | 1,0 |
| CaO | Ma.-% | 21,8 | 35,0 |
| MgO | Ma.-% | 1,85 | 2,4 |
| P₂O₅ | Ma.-% | 16,8 | 31,6 |
| Na₂O | Ma.-% | 1,75 | 4,8 |
| K₂O | Ma.-% | 1,75 | 5,4 |
| SO₃ | ppm | 47 | |

**Tabelle 2:**

| **Beispiel für Tiermehl/Öl-Vergasung** | | |
|---|---|---|
| **Einsatzstoffe** | | |
| Tiermehl/Öl-Maische (50 / 50 %) | kg/h | 28,600 |
| Sauerstoff (95 %, 35 bara, 80 °C) | Nm³/h | 19,730 |
| Dampf (30 bara, 234 °C) | kg/h | 11,445 |
| Erdgas | Nm³/h | 300 |
| Stickstoff | Nm³/h | 35 |
| Waschwasser | t/h | 75,5 |
| Kühlwasser (Δ T = 10 K) | t/h | 61,4 |
| | | |

| **Verfahrensbedingungen** | | |
|---|---|---|
| Druck | bar a | 25 |
| Temperatur | °C | 1600 |
| Kohlenstoffumsatz | % | 99,5 |
| Kaltgaswirkungsgrad | % | 75,6 |
| | | |

| **Ausbeute** | | |
|---|---|---|
| Rohgas (gewaschen) | Nm³/h feucht | 166,139 |
| | Nm³/h trocken | 60,484 |
| Hᵤ | MJ/Nm³ | 10,5 |
| gesamt | MW | 177 |
| | | |
| Rohgasanalyse (trocken) | | |
| | | |
| H₂ | Vol-% | 37,8 |
| CO | Vol-% | 50,7 |
| CO₂ | Vol-% | 8,0 |
| CH₄ | Vol-% | 0,0 |
| N₂ | Vol-% | 3,2 |
| H₂S | Vol-% | 0,1 |
| | | |
| Schlacke (granuliert) | t/h | 2,6 |
| Prozesswasser | t/h | 3,0 |
| Wärme (v. Kühlschirm) | MW | 4,1 |

## Patentansprüche

1. Verfahren zur stofflichen oder energetischen Verwertung von Tiermehl durch
- Herstellung einer pumpbaren Maische aus Wasser und Tiermehl oder Ölen unterschiedlicher Konsistenz mit Tiermehl.
- Förderung der Maische unter Druck in einen als Flugstromreaktor ausgebildeten Vergasungsreaktor.
- Umsatz der Maische mit technischem Sauerstoff oder einem freien Sauerstoff enthaltenden Vergasungsmittel zu einem Rohsynthesegas.
- Einstellung einer Vergasungstemperatur, bei der die anorganischen Bestandteile des Tiermehls aufgeschmolzen und als schmelzflüssige Schlacke aus dem Vergasungsreaktor ausgetragen werden.
- Direkte oder indirekte Abkühlung des den Vergasungsraum verlassenden Rohgases.
- Abkühlung und Granulierung der schmelzflüssigen Schlacke durch Kontaktierung mit Wasser in einem der Vergasungskammer nachgeordneten Kühl- oder Quenchraum.
- Reinigung und Konditionierung des gekühlten Rohgases zur Erzeugung von Synthesegas oder energetischem Gas.

2. Verfahren nach Anspruch 1, **dadurch gekennzeichnet, dass** die zur Vergasung gelangende Maische bis zu 70 Masse-% Tiermehl und 30 Masse-% Wasser oder Öle enthält.

3. Verfahren nach Anspruch 1, **dadurch gekennzeichnet, dass** die Vergasung der Maische bei Drücken zwischen Umgebungsdruck und 70 bar, bevorzugt zwischen 10 und 30 bar sowie bei Temperaturen zwischen 1100 °C und 1700 °C, bevorzugt zwischen 1200 bis 1600 °C durchgeführt wird.

4. Verfahren nach Anspruch 1, **dadurch gekennzeichnet, dass** zur Erniedrigung des Schmelzpunktes der anorganischen Bestandteile des Tiermehls der Maische Flussmittel zugesetzt werden.

5. Verfahren nach Anspruch 1 und 4, **dadurch gekennzeichnet, dass** als Flussmittel SiO₂, CaO, Al₂O₃ und Fe₂O₃ allein oder in ihren Mischungen eingesetzt werden.

6. Verfahren nach den Ansprüchen 1 bis 5, **dadurch gekennzeichnet, dass** die zur Vergasung gelangende Maische über ein Brennersystem der Vergasungskammer zugeführt wird, bei der die Zerteilung der Maische durch eine Druckzerstäubung durchgeführt wird.

7. Verfahren nach den Ansprüchen 1 bis 5, **dadurch gekennzeichnet, dass** das Vergasungsrohgas und die flüssige Schlacke gemeinsam in einer der Vergasungskammer nachgeordneten Kühlkammer abgekühlt werden.

8. Verfahren nach Anspruch 1 bis 5, **dadurch gekennzeichnet, dass** die zur Vergasung gelangende Maische über ein Brennersystem der Vergasungskammer zugeführt wird, bei der die Zerteilung der Maische durch eine Injektionszerstäubung durchgeführt wird, wobei Wasserdampf, der der Vergasung dienende Sauerstoff oder ein anderes brennbares oder nicht brennbares Gas als Zerstäubungsmedium dienen.

9. Verfahren nach den Ansprüchen 1 bis 8, **dadurch gekennzeichnet, dass** das Vergasungsrohgas und die flüssige Schlacke getrennt aus der Vergasungskammer abgeführt und Kühlvorrichtungen zugeführt werden.

10. Vorrichtung zur Durchführung eines Verfahrens nach den Ansprüch 1 bis 9, **dadurch gekennzeichnet, dass** die Vergasungskammer eines Flugstromreaktors (2) durch eine gekühlte Kontur begrenzt wird.

11. Vorrichtung nach Anspruch 10, **dadurch gekennzeichnet, dass** die gekühlte Kontur des Flugstromreaktors (2) aus einem geschlossenen System gasdicht verschweißter Rohre besteht, die bestiftet und mit einer dünnen Schicht aus SiC belegt sind und zur Kühlung von Wasser durchströmt werden.

12. Vorrichtung nach Anspruch 10 und 11, **dadurch gekennzeichnet, dass** die Kühlkammer mit einem System von Düsen ausgerüstet ist, über die Kühlwasser im Überschuss eingespritzt wird.

13. Vorrichtung nach Anspruch 9 bis 11, **dadurch gekennzeichnet, dass** die Kühlvorrichtung als indirekter Wärmeübertrager ausgebildet ist und während des Kühlvorganges gleichzeitig Dampf erzeugt wird.

14. Vorrichtung nach einem der Ansprüche 10 bis 13, **dadurch gekennzeichnet, dass** die Zuführung der zur Vergasung gelangenden Maische über ein Brennersystem erfolgt.

15. Vorrichtung nach einem der Ansprüche 10 bis 14, **dadurch gekennzeichnet, dass** die Zerteilung der Maische durch einen Brenner mit Injektionszerstäubung erfolgt.
